(19) **Europäisches Patentamt**

**European Patent Office**

**Office européen des brevets**

(11) **EP 1 023 547 B1**

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(51) Int Cl.7: **F16H 59/66**
// F16H59:44

(21) Anmeldenummer: **98954424.2**

(22) Anmeldetag: **16.10.1998**

(86) Internationale Anmeldenummer:
**PCT/EP98/06565**

(87) Internationale Veröffentlichungsnummer:
**WO 99/020922 (29.04.1999 Gazette 1999/17)**

(54) **VERFAHREN UND VORRICHTUNG ZUM ERMITTELN EINER EXTERN VERURSACHTEN, EIN FAHRZEUG ANTREIBENDEN ODER BREMSENDEN GRÖSSE, INSBESONDERE EINES SOLCHEN MOMENTS**

METHOD AND DEVICE FOR DETECTING AN EXTERNALLY CAUSED VARIABLE DRIVING OR BRAKING A VEHICLE, ESPECIALLY SUCH A MOMENT

PROCEDE ET DISPOSITIF POUR DETERMINER UNE GRANDEUR INDUITE EXTERIEUREMENT QUI ENTRAINE OU FREINE UN VEHICULE, EN PARTICULIER UN COUPLE

(84) Benannte Vertragsstaaten:
**DE FR GB**

(30) Priorität: **17.10.1997 DE 19745958**
**20.01.1998 DE 19802216**

(43) Veröffentlichungstag der Anmeldung:
**02.08.2000 Patentblatt 2000/31**

(73) Patentinhaber: **Continental Teves AG & Co. oHG**
**60488 Frankfurt (DE)**

(72) Erfinder:
• **ECKERT, Alfred**
**D-55129 Mainz (DE)**

• **DIEBOLD, Jürgen**
**D-65760 Eschborn (DE)**

(56) Entgegenhaltungen:
**EP-A- 0 142 633        DE-A- 4 328 893**
**US-A- 5 455 767        US-A- 5 514 050**

• **ALLES S ET AL: "THE HARDWARE DESIGN OF A REAL-TIME HITL FOR TRACTION ASSIST SIMULATION" IEEE TRANSACTIONS ON VEHICULAR TECHNOLOGY, Bd. 44, Nr. 3, 1. August 1995, Seiten 668-681, XP000526060**

**Beschreibung**

Die vorliegende Erfindung betrifft ein Verfahren und eine Vorrichtung zum Ermitteln einer extern verursachten, ein Fahrzeug antreibenden oder bremsenden Größe und insbesondere eines solchen Moments. Die Längsdynamik eines Fahrzeugs - Geschwindigkeit und Beschleunigung - wird durch verschiedene interne und externe Größen, insbesondere Momente, beeinflußt. Interne Größen/Momente im Sinne dieser Beschreibung sind beispielsweise das Motormoment, das Bremsmoment oder die Fahrwiderstände (die sich intern z. B. anhand von auf Erfahrungswerten basierenden Tabellen oder durch Konstanten oder durch Formeln, die den Fahrzeugbewegungszustand im Zusammenhang mit den Eigenschaften/Kennwerten des Fahrzeugs berücksichtigen, beschreiben lassen). Diese Größen lassen sich durch verschiedene Maßnahmen vergleichsweise genau ermitteln, so daß ihr Einfluß auf die Längsdynamik berücksichtigt werden kann. Daneben gibt es aber auch extern verursachte Größen, die sich insbesondere variabel zusätzlich zu den oben genannten (intern beschreibbaren) Fahrwiderständen ergeben. Hierzu zählt beispielsweise die Hangabtriebskraft, wenn ein Fahrzeug auf einer geneigten Fahrbahn fährt. Die Hangabtriebskraft führt zu einem Moment, das die Längsdynamik des Fahrzeugs beeinflußt. Das gleiche gilt beispielsweise für Windkräfte, außergewöhnliche Rollwiderstände oder ähnliches. Diese extern verursachten Größen lassen sich entweder gar nicht oder über herkömmliche Sensoren nur schwer ermitteln - in der Regel benötigt man aber zusätzliche Sensorik, die es einzusparen gilt.

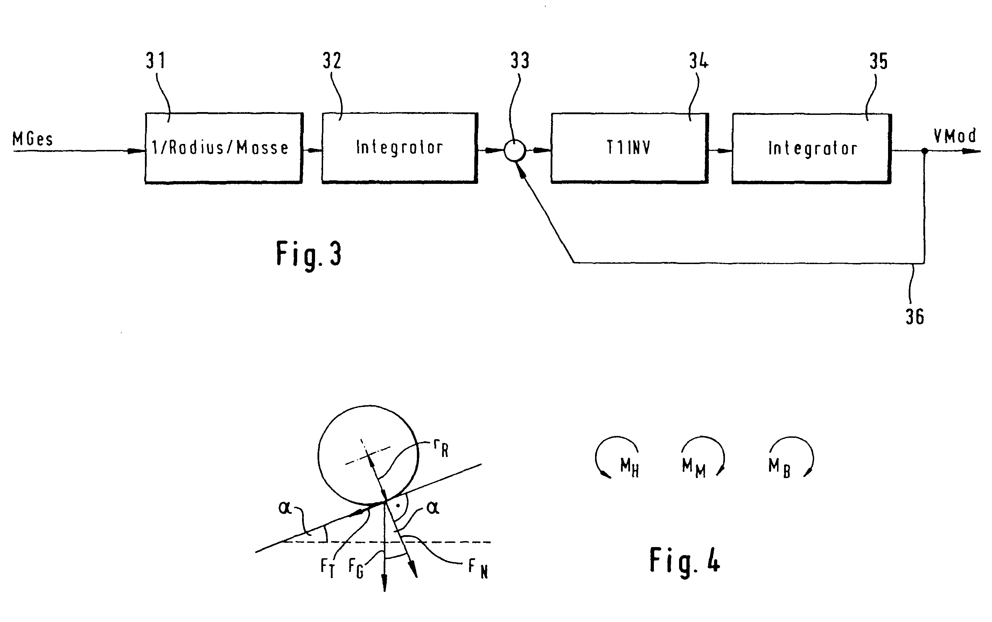

Für verschiedene Anwendungen ist es aber wünschenswert, auch extern verursachte, ein Fahrzeug antreibende oder bremsende Größen, insbesondere solche Momente, zu kennen. Ein Beispiel für eine solche Anwendung wäre eine Anfahrhilfe am Berg. Anfahrhilfen am Berg sollen das komplizierte Handhaben von Bremse, Feststellbremse, Kupplung und Motor vereinfachen. Gleichzeitig muß aber sichergestellt werden, daß unter keinen Umständen das Fahrzeug rückwärts rollt, um beispielsweise Kollisionen mit bergab stehenden Fahrzeugen zu vermeiden. Wenn ein Fahrzeug am Berg anfahren will, gelten in erster Näherung die in Fig. 4 schematisch dargestellten Gesetzmäßigkeiten. Die Gewichtskraft $F_G$ des Fahrzeugs kann in eine Normalkomponente $F_N$ und eine Tangentialkomponente $F_T$ am Reifen eines Einradmodells zerlegt werden. $F_T$ führt zusammen mit dem Reifenradius $r_R$ zu einem Hangabtriebsmoment $M_H$ gemäß der Formel

$$M_H = F_G \cdot \sin \alpha \cdot r_R$$

Hierbei ist $\alpha$ der Steigungswinkel. Das Hangabtriebsmoment $M_H$ würde ohne weitere Einflußmaßnahmen dazu führen, daß das Fahrzeug bergab rollt. Ihm entgegen wirken das haltende Bremsmoment $M_B$ und das beim Anfahren zusätzlich eingebrachte Motormoment $M_M$. Eine Anfahrhilfe am Berg kann beispielsweise das Bremsmoment $M_B$ beeinflussen. Die Beeinflussung muß aber so erfolgen, daß zu jedem Zeitpunkt sichergestellt ist, daß die Ungleichung

$$M_H < M_B + M_M$$

erfüllt ist. Nur dann wird ein Rückwärtsrollen des Fahrzeugs sicher vermieden. Um die obige Gleichung erfüllen zu können, ist die Kenntnis des Hangabtriebsmoments erforderlich.

Ähnliche Überlegungen wie die obigen gelten in dynamischen Situationen (Fahrzuggeschwindigkeit ungleich Null). Bei langsamer Bergauffahrt im Stadtverkehr können beispielsweise Überlegungen wie die oben angesprochenen wichtig werden. Auch in solchen Fällen ist es wünschenswert, die extern verursachten, ein Fahrzeug antreibenden oder bremsenden Größen, insbesondere solche Momente, zu kennen, um das Fahrzeug geeignet beeinflussen zu können.

Aus der DE 43 28 893 A ist ein Verfahren, bzw. eine Vorrichtung zum Ermitteln eines Gefälles offenbart, wobei ein Raddrehmoment, das in einem Fahrzeugmodell für den Luftwiderstand oder die Fahrzeugmasse Beschleunigung ermittelt wurde, in einem Vergleicher mit einem vom Motor erzeugten Ausgangsmoment am Rad, das mittels dem Drehmomentwandlerschlupf und der Getriebeübersetzung gerechnet wurde, verglichen wird. Es ist gängig solche Drehmomente am Getriebe Ausgang oder Eingang zu vergleichen oder sogar direkt die Fahrzeugbeschleunigungen zwischen Messungen und Modell zu vergleichen.

Weiterhin ist aus der US-A-5 455 767 bekannt, daß die gemessene Getriebeausgangsdrehzahl mit einer geschätzten Drehzahl verglichen und die Differenz als Beschleunigung nach der Integration auf einen Summierpunkt rückgekoppelt wird.

Aufgabe der Erfindung ist es, ein Verfahren und eine Vorrichtung zum Ermitteln einer extern verursachten, ein Fahrzeug antreibenden oder bremsenden Größe, insbesondere eines solchen Moments, anzugeben.

Die extern verursachten Größen und insbesondere Momente werden durch einen Beobachter ermittelt. Der Beobachter empfängt intern verursachte, ein Fahrzeug antreibende oder bremsende Größen, insbesondere Momente, ermittelt daraus, wie sich die Längsdynamik des Fahrzeugs entwickeln müßte, vergleicht dieses Ergebnis mit tatsächlich gemessenen Werten der Längsdynamik und schließt aus eventuellen Abweichungen auf extern verursachte, ein Fahrzeug antreibende oder bremsende Größen, insbesondere Momente.

Bezugnehmend auf die beiliegenden Zeichnungen wird die Erfindung genauer erläutert, es zeigen:

Fig. 1 ein Blockdiagramm der Erfindung,

Fig. 2 den Beobachter aus Fig. 1,

Fig. 3 beispielhaft ein Modell für die Fahrzeugdynamik, und

Fig. 4 schematisch geltende physikalische Zusammenhänge in einer beispielhaften Anwendung.

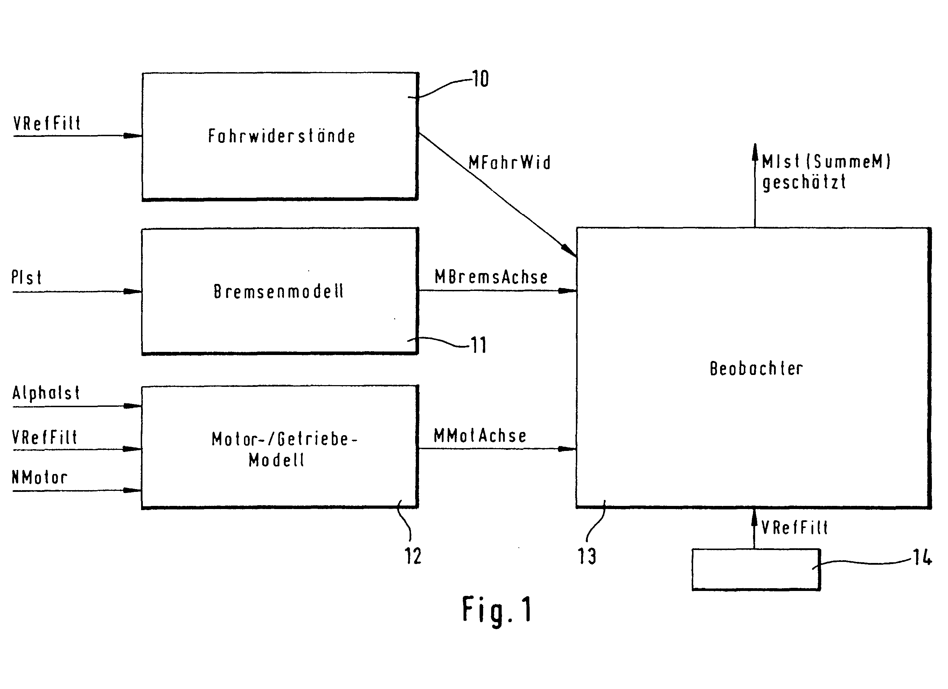

Fig. 1 zeigt schematisch eine erste erfindungsgemäße Ausführungsform. Die Einrichtungen 10 bis 12 sind Einrichtungen zum Ermitteln interner bzw. intern verursachter Momente. Insbesondere können eine Einrichtung 12 zur Ermittlung des Motormoments MMot-Achse und eine Einrichtung 11 zum Ermitteln eines Bremsmoments MBremsAchse vorgesehen sein. Daneben kann auch eine Einrichtung 10 zum Ermitteln eines Fahrwiderstands MFahrWid vorgesehen sein. Die Einrichtungen 10 bis 12 arbeiten ihrerseits nach Maßgabe bestimmter Eingangsgrößen. Insbesondere können die Einrichtungen 11 und 12 Modelle und/oder Tabellen sein, die das Verhalten der Bremse und/oder des Motors/Getriebes modellieren bzw. beschreiben und die gewünschten Ausgangsgrößen liefern.

Der Beobachter 13 ermittelt anhand eines Modells und bezugnehmend auf die oben geschilderten Eingangsgrößen das "theoretische" Fahrverhalten bzw. die "theoretische" Längsdynamik, insbesondere Geschwindigkeit, des Fahrzeugs, wobei auch hierfür auf charakteristische Werte Bezug genommen wird. Charakteristische Werte sind beispielsweise Reifenradius oder Fahrzeugmasse. Außerdem empfängt der Beobachter 13 einen dem theoretischen Wert entsprechenden gemessenen Wert aus einer entsprechenden Einrichtung 14. Eine Abweichung zwischen theoretischem und gemessenem Wert kann bei hinreichend genauer Modellierung der Längsdynamik auf extern verursachte, nicht modellierte Größen, insbesondere Momente, zurückgeführt werden, so daß aus der Abweichung auf eben diese externe Größe geschlossen werden kann.

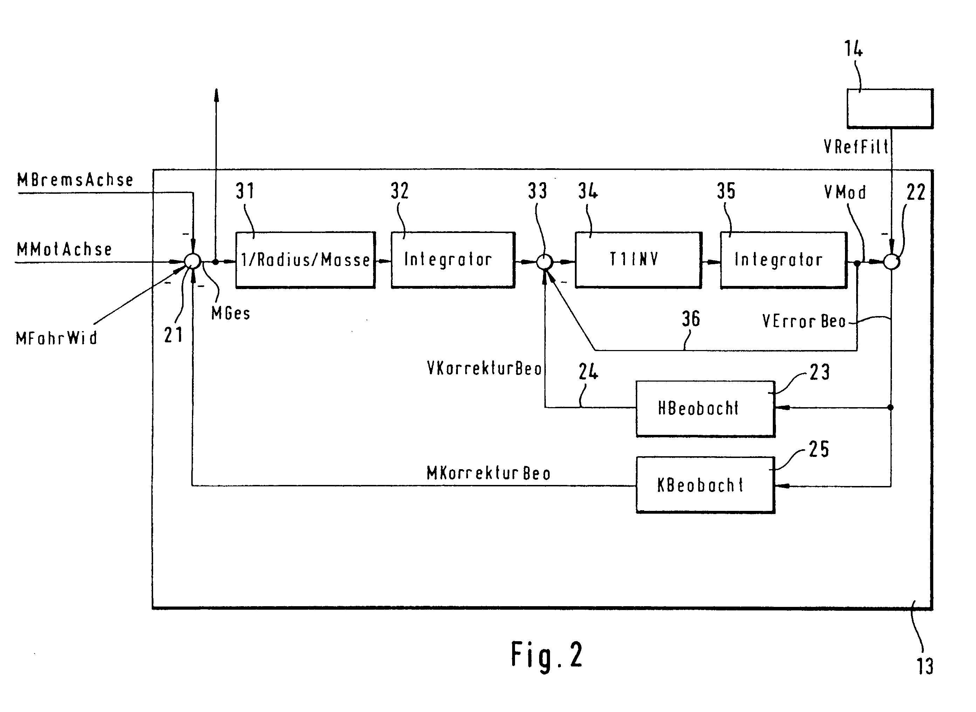

Fig. 2 zeigt den Beobachter 13 aus Fig. 1 in genauerer Darstellung. Der Beobachter 13 weist ein Modell des Fahrverhaltens bzw. der Längsdynamik des Fahrzeugs auf, dies sind die Ziffern 31 bis 36. Außerdem weist er eine Einrichtung zur Ermittlung der externen Größe auf, es handelt sich um die Ziffern 21, 22, 25. Bevor die Funktion des Beobachters 13 anhand von Fig. 2 genauer erläutert wird, wird bezugnehmend auf Fig. 3 das Modell des Fahrverhaltens bzw. der Längsdynamik des Fahrzeugs beschrieben. In Fig. 3 sind die Komponenten 31 bis 36 aus Fig. 2 zur Verdeutlichung nochmals wiedergegeben.

Das Modell für das Fahrverhalten des Fahrzeugs bzw. für dessen Längsdynamik muß, damit es für die vorliegende Erfindung geeignet ist, zumindest zwei Bedingungen erfüllen:

- Es muß geeignete Eingangs- und Ausgangswerte haben, und

- es muß statische wie dynamische Effekte hinreichend genau berücksichtigen.

Das Modell in Fig. 3 erfüllt diese Forderungen. Als Eingangswert empfängt es ein Gesamtmoment, das auf das Fahrzeug wirkt. Dieses Gesamtmoment MGes ist die Summe aller beschleunigenden und verzögernden Momente. Wenn das Gesamtmoment MGes Null ist, wird das Fahrzeug mit konstanter Geschwindigkeit fahren. Ist es größer Null, wird das Fahrzeug beschleunigt, ist es negativ, wird das Fahrzeug verzögert. In der Kalibrierung 31 wird das Gesamtmoment nach Maßgabe von Radradius und Fahrzeugmasse kalibriert. Unter "Kalibrierung" ist hierbei eine proportionale Umrechnung zu verstehen, die z. B. der Umrechnung, Normierung oder Werteanpassung dient. Man erhält dadurch eine einer Beschleunigung entsprechenden Größe. Im Integrierer 32 wird diese Größe integriert. Dadurch ergibt sich eine einer Geschwindigkeit entsprechende Größe. Außerdem ist eine die Dynamik nachbildende Baugruppe 33 bis 36 vorgesehen. In der dargestellten Ausführungsform handelt es sich um ein $PT_1$-Glied, das Veränderungen am Eingang nur allmählich an den Ausgang weitergibt. Das $PT_1$-Glied besteht aus einem Subtrahierer 33, einer Kalibrierung 34, einem Integrierer 35 und der Rückführung 36, die am Subtrahierer 33 eingespeist wird. Durch den Wert der Kalibrierung 34 wird die Zeitkonstante des $PT_1$-Glieds bestimmt.

Mit dem $PT_1$-Glied wird der Tatsache Rechnung getragen, daß reale Systeme auf Änderungen ihrer Eingangsgrößen praktisch immer verzögert reagieren. Damit wird eine verbesserte Nachbildung der Fahrzeugdynamik möglich. Als Ausgang ergibt sich eine Geschwindigkeit VMod, die das Modell in Fig. 3 als "theoretische" Geschwindigkeit des Fahrzeugs anhand des eingegebenen Gesamtmoments MGes ermittelt hat.

Die Reihenfolge der einzelnen Komponenten kann auch anders als in Fig. 3 gezeigt sein. Die gegenkoppelnde Rückführung 23, 24 in Fig. 2 sollte jedoch nach dem Integrierer 32 eingespeist werden. Die Einrichtung 14 zur Ermittlung der Ist-Fahrzeuggeschwindigkeit VRefFilt kann ein Sensor sein, der ein entsprechendes Signal ausgibt. Es kann aber auch eine komplexere Vorrichtung vorgesehen sein, die geeignete Beurteilungs- und Filtermaßnahmen vornimmt, um möglichst störungsfreie Signale zu erhalten.

Das bezugnehmend auf Fig. 3 beschriebene Fahrzeugmodell ist beispielhaft zu verstehen. Es können auch andere Modelle verwendet werden, die den weiter oben erhobenen Forderungen genügen.

Nun abermals bezugnehmend auf Fig. 2 wird die Verwendung des Modells aus Fig. 3 im Beobachter 13 erläutert. Die vom Modell ermittelte "theoretische" Fahrzeuggeschwindigkeit VMod wird mit der tatsächlichen Fahrzeuggeschwindigkeit VRefFilt verglichen.

Insbesondere wird im Subtrahierer 22 die Differenz zwischen Modellgeschwindigkeit (auch Schätz-Fahrzeuggeschwindigkeit genannt) und tatsächlicher Geschwindigkeit (auch Ist-Fahrzeuggeschwindigkeit genannt) VRefFilt gebildet. Die Abweichung zwischen Schätz- und Ist-Fahrzeuggeschwindigkeit ist auf extern verursachte, nicht modellierte Größen und insbesondere Momente zurückzuführen und erlaubt damit einen Rückschluß auf eben diese externen Größen und insbesondere Momente. Wenn das Fahrzeug beispielsweise bergauf fährt, wirkt das extern verursachte Moment verzögernd. Ohne Berücksichtigung dieses externen Moments würde die Schätz-Geschwindigkeit zu hoch und insbesondere höher als die Ist-Fahrzeuggeschwindigkeit sein. Wenn das Fahrzeug bergab fährt, wirkt das Hangabtriebsmoment beschleunigend. Ohne Berücksichtigung des Hangabtriebsmoments würde demnach die Schätz-Fahrzeuggeschwindigkeit VMod kleiner sein als die Ist-Fahrzeuggeschwindigkeit VRefFilt. Somit kann aus der Abweichung und insbesondere der Differenz zwischen Schätz- und Ist-Fahrzeuggeschwindigkeit die extern verursachte Größe, insbesondere das extern verursachte Moment, ermittelt werden. Damit dann der Beobachter 13 insgesamt stabil arbeitet, kann das ermittelte externe Moment zu den übrigen schon ermittelten Momenten (aus den Einrichtungen 10 bis 12) vorzeichenrichtig addiert werden. Dazu wird es im Summationspunkt 21 eingeführt. Die Einrichtung 25 ist eine Kalibrierung, die den Geschwindigkeitsunterschied in den entsprechenden Momentenfehler vorzugsweise proportional umrechnet. Damit ist der Ausgang der Einrichtung 25, das Signal MKorrekturBeo, das eigentlich gesuchte extern verursachte Moment, das als Ausgangssignal verwendet werden kann und das, wie schon gesagt, auch in den Beobachter am Summationspunkt 21 zurückgeführt werden kann.

Aus regelungstechnischer Sicht kann außerdem eine Rückführung 23, 24 vorgesehen sein, die ein der Differenz zwischen Schätz-Fahrzeuggeschwindigkeit und Ist-Fahrzeuggeschwindigkeit proportionales Signal in das Fahrzeugmodell nach dem Integrierer zurückführt. Stabilität und dynamische Eigenschaften des Modells werden dadurch verbessert. Die gegenkoppelnde Rückführung kann beispielsweise am Summationspunkt 33 erfolgen.

Die erfindungsgemäße Vorrichtung kann durch diskrete Bauelemente implementiert sein. Sie kann aber auch durch einen geeignet programmierten Rechner gebildet sein, der die entsprechenden Eingangsgrößen empfängt, die gewünschten Ausgangsgrößen ausgibt und Zugriff auf die weiterhin benötigten Daten hat. Das Verfahren wird vorzugsweise fortlaufend ausgeführt oder periodisch angestoßen.

**Patentansprüche**

1. Verfahren zum Ermitteln einer extern verursachten, ein Fahrzeug antreibenden oder bremsenden Größe, insbesondere eines solchen Moments, **gekennzeichnet durch** die Schritte Ermitteln von internen, das Fahrzeug beschleunigenden Motormomenten (MMotAchse) und von das Fahrzeug verzögernden Motor- (MMotAchse) und Bremsmomenten (MBremsAchse) oder Kräften, Ermitteln einer Schätz-Fahrzeuggeschwindigkeit (Vmod) aus einem, mindestens aus den Motor- (MMotAchse) und Bremsmomenten (MBremsAchse) oder Kräften bestimmten Gesamtmoment (Mges) oder Kräften, Ermitteln der Ist-Fahrzeuggeschwindigkeit (VRefFilt) anhand gemessener Werte, Ermitteln der extern verursachten Größe (MKorrekturMBeo), insbesondere des Moments, nach Maßgabe der Ist- und der Schätz-Fahrzeuggeschwindigkeit, und Zurückführung der extern verursachten Größe (MKorrekturBeo), insbesondere des Moments, zur Bestimmung bzw. Korrektur des Gesamtmomentes (Mges) bzw.der Kräfte.

2. Verfahren nach Anspruch 1, **dadurch gekennzeichnet, daß** die Schätz-Fahrzeuggeschwindigkeit auch nach Maßgabe der Fahrwiderstände (MFahrWid) ermittelt wird.

3. Verfahren nach Anspruch 2, **dadurch gekennzeichnet, daß** der Schritt des Ermittelns der Schätz-Fahrzeuggeschwindigkeit aufweist vorzeichenrichtiges Summieren von das Fahrzeug antreibenden und bremsenden Momenten, Kalibrieren der Summe nach Maßgabe der Fahrzeugmasse und des Radradiuses, und Integrieren des kalibrierten Wertes.

4. Verfahren nach einem der Ansprüche 1 bis 3, **dadurch gekennzeichnet, daß** die extern verursachte Größe, insbesondere Moment, nach Maßgabe der Differenz zwischen Ist- und Schätz-Fahrzeuggeschwindigkeit ermittelt wird.

5. Verfahren nach einem der Ansprüche 1 bis 4 und insbesondere 3, **dadurch gekennzeichnet, daß** das Integral ein Verzögerungsglied, insbesondere erster Ordnung, durchläuft.

6. Verfahren nach Anspruch 5, **dadurch gekennzeichnet, daß** die kalibrierte Differenz zwischen Ist- und Schätz-Fahrzeuggeschwindigkeit dem Integral gegengekoppelt wird.

7. Verfahren nach einem der Ansprüche 1 bis 6, **dadurch gekennzeichnet, daß** die Schätz-Fahrzeuggeschwindigkeit nach Maßgabe des Motormoments, des Bremsmoments und eines Fahrwiderstands ermittelt wird.

8. Vorrichtung zum Ermitteln einer extern verursachten, ein Fahrzeug antreibenden oder bremsenden Größe, insbesondere eines solchen Moments, **gekennzeichnet durch** eine erste Ermittlungseinrichtung (10 - 12) zum Ermitteln von internen, das Fahrzeug beschleunigenden Motormomenten (MMotAchse) und von das Fahrzeug verzögernden Motor-(MMotAchse) und Bremsmomenten (MBremsAchse) oder Kräften, eine zweite Ermittlungseinrichtung (31 - 36) zum Ermitteln einer Schätz-Fahrzeuggeschwindigkeit (Vmod) aus einem, mindestens aus den Motor- (MMotAchse) und Bremsmomenten (MBremsAchse) oder Kräften bestimmten Gesamtmoment (Mges) oder Kräften, eine dritte Ermittlungseinrichtung (14) zum Ermitteln der Ist-Fahrzeuggeschwindigkeit (VRefFilt) anhand gemessener Werte, eine vierte Ermittlungseinrichtung (22, 25) zum Ermitteln der extern verursachten Größe (MKorrekturBeo), insbesondere Moments, nach Maßgabe der Ist- und der Schätz-Fahrzeuggeschwindigkeit, und eine Einrichtung (25) zum Zurückführen der extern verursachten Größe (MKorrekturBeo), insbesondere des Moments, zur Bestimmung bzw. Korrektur des Gesamtmoments (Mges) oder der Kräfte.

**9.** Vorrichtung nach Anspruch 8, **dadurch gekennzeichnet, daß** die zweite Ermittlungseinrichtung aufweist:

einen Addierer (21) zum vorzeichenrichtigen Summieren von das Fahrzeug antreibenden und bremsenden Momenten,
einen Kalibrierer (31) zum Kalibrieren der Addiererausgabe nach Maßgabe der Fahrzeugmasse und des Radradiuses, und
einen Integrierer (32) zum Integrieren der Kalibriererausgabe.

**10.** Vorrichtung nach Anspruch 8 oder 9, **dadurch gekennzeichnet, daß** die vierte Ermittlungseinrichtung einen Subtrahierer (22) aufweist, der die Differenz zwischen Ist- und Schätz-Fahrzeuggeschwindigkeit bildet.

**11.** Vorrichtung nach einem der Ansprüche 8 bis 10 und insbesondere 9, **dadurch gekennzeichnet, daß** die dritte Ermittlungseinrichtung ein dem Integrierer nachgeschaltetes Verzögerungsglied (34 - 36), insbesondere erster Ordnung, aufweist.

**12.** Vorrichtung nach Anspruch 11, **gekennzeichnet durch** eine Gegenkopplung (23) der kalibrierten Differenz zwischen Ist- und Schatz-Fahrzeuggeschwindigkeit zur Ausgabe des Integrierers.

**13.** Vorrichtung nach einem der Ansprüche 8 bis 12, **dadurch gekennzeichnet, daß** die erste Ermittlungseinrichtung aufweist eine Einrichtung (10) zum Ermitteln eines Fahrwiderstands (MFahrWid), eine Einrichtung (11) zum Ermitteln eines Bremsmoments (MBremsAchse), und eine Einrichtung (10) zum Ermitteln eines Motormoments (MMotAchse).

**Claims**

**1.** Method for determining an externally produced value accelerating or decelerating a vehicle, in particular such a momentum, **characterized by** the following steps:

determination of internal motor torques (MMotAxis) accelerating the vehicle, and of motor torques (MMotAxis) and brake torques (MBrakeAxis) or forces decelerating the vehicle, determination of an estimated vehicle speed (VMod) from forces or a total momentum (MTot) defined at least by motor torques (MMotAxis) and brake torques (MBremsAxis) or forces, determination of the real vehicle speed (VRefFilt) on the basis of measured values, determination of the externally produced value (MCorrectionMObs), in particular the momentum, according to the real and the estimated vehicle speed and feedback of the externally produced value (MCorrectionObs), in particular of the momentum, in order to determine or correct the total momentum (MTot) or the forces.

**2.** Method according to claim 1, **characterized in that** the estimated vehicle speed is also determined according to the normal resistances (MNormRes).

**3.** Method according to claim 2, **characterized in that** the step of determining the estimated vehicle speed includes the addition of the accelerating or decelerating momentums with the correct algebraic signs, the calibration of the sum according to the vehicle mass and the wheel radius, and integration of the calibrated value.

**4.** Method according to any one of claims 1 to 3, **characterized in that** the externally produced value, especially momentum, is determined according to the difference between the real and the estimated vehicle speed.

**5.** Method according to any one of claims 1 to 4, especially 3, **characterized in that** the integral passes through a decelerating member, in particular of first order.

**6.** Method according to claim 5, **characterized in that** the calibrated difference between the real and the estimated vehicle speed is countercoupled to the integral.

**7.** Method according to any one of claims 1 to 6, **characterized in that** the estimated vehicle speed is determined according to the motor torque, the brake torque and a normal resistance.

**8.** Device for determining an externally produced value accelerating or decelerating the vehicle, especially such a momentum, **characterized by** a first determining device (10-12) for determining internal motor torques accelerating the vehicle (MMotAxis) and motor torques (MMotAxis) and brake torques (MBrakeAxis) or forces decelerating the vehicle, a second determining device (31-36) for determining an estimated vehicle speed (VMod) on the basis of a total momentum (MTot) or forces defined by at least the motor torques (MMotAxis) and brake torques (MBrakeAxis) or forces, a third determining device (14) for determining of the real vehicle speed (VRefFilt) on the basis of measured values, a fourth determining device (22, 25) for determining the externally produced value (MCorrectionObs), in particular a momentum, according to the real and the estimated vehicle speed, and a device (25) for the feedback of the externally produced value (MCorrectionObs), in particular the momentum, for determining or correcting the total momentum (MTot) or the forces.

**9.** Device according to claim 8, **characterized in that** the second determining device includes:

> an adder (21) for summing up momentums with the correct algebraic signs which accelerate or decelerate the vehicle, a calibrator (31) for calibrating the adder output according to the vehicle mass and the wheel radius, and an integrator (32) for integrating the calibrator output.

**10.** Device according to claim 8 or 9, **characterized in that** the fourth determining device includes a subtractor (22) forming the difference between the real and the estimated vehicle speed.

**11.** Device according to any one of claims 8 to 10, especially 9, **characterized in that** the third determining device includes a decelerating member (34-36), especially of first order, connected downstream the integrator.

**12.** Device according to claim 11, **characterized by** a countercoupling (23) of the calibrated difference between the real and the estimated vehicle speed for the output of the integrator.

**13.** Device according to any one of claims 8 to 12, **characterized in that** the first determining device includes a device (10) for determining a normal resistance (MNormRes), a device (11) for determining a brake torque (MBrakeAxis), and a device (10) for determining a motor torque (MMotAxis).

## Revendications

**1.** Procédé pour déterminer une grandeur dont la cause est externe et qui entraîne ou freine un véhicule, en particulier un couple de ce type, **caractérisé par** les étapes : détermination de couples moteur (MMotAchse) internes accélérant le véhicule, et de couples moteur (MMotAchse) ralentissant le véhicule et de couples de freinage (MBremsAchse) ou de forces, détermination d'une vitesse estimée du véhicule (Vmod) à partir d'un couple total (Mges), déterminé au moins à partir des couples moteur (MMotAchse) et couples de freinage (MBremsAchse) ou des forces, détermination de la vitesse réelle du véhicule (VRefFilt) à l'aide de valeurs mesurées, détermination de la grandeur à cause externe (MKorrekturMBeo), en particulier du couple, en fonction de la vitesse réelle et de la vitesse estimée du véhicule, et réinjection de la grandeur à cause externe (MKorrekturBeo), en particulier du couple pour déterminer ou corriger le couple total (Mges), ou des forces.

**2.** Procédé selon la revendication 1, **caractérisé en ce que** la vitesse estimée du véhicule est déterminée aussi en fonction des résistances de marche (MFahrWid).

**3.** Procédé selon la revendication 2, **caractérisé en ce que** l'étape de la détermination de la vitesse estimée du véhicule comporte l'addition avec signe correct de couples entraînant et freinant le véhicule, le calibrage de la somme en fonction de la masse du véhicule et du rayon des roues, et l'intégration de la valeur calibrée.

**4.** Procédé selon l'une des revendications 1 à 3, **caractérisé en ce que** la grandeur à cause externe, en particulier le couple, est déterminée en fonction de la différence entre la vitesse réelle et la vitesse estimée du véhicule.

**5.** Procédé selon l'une des revendications 1 à 4 et en particulier la revendication 3, **caractérisé en ce que** l'intégrale passe par un élément de temporisation, en particulier de premier ordre.

**6.** Procédé selon la revendication 5, **caractérisé en ce qu'**on réapplique la différence calibrée entre la vitesse réelle et la vitesse estimée du véhicule à l'intégrale.

**7.** Procédé selon l'une des revendications 1 à 6, **caractérisé en ce qu'**on détermine la vitesse estimée du véhicule en fonction du couple moteur, du couple de freinage et d'une résistance de marche.

8. Dispositif pour déterminer une grandeur à cause externe, entraînant ou freinant un véhicule, en particulier un couple de ce type, **caractérisé par** un premier dispositif de détermination (10-12) pour déterminer des couples moteur internes (MMotAchse) accélérant le véhicule et des couples moteur (MMotAchse) et des couples de freinage (MBremsAchse) ralentissant le véhicule ou des forces, un deuxième dispositif de détermination (31-36) pour déterminer une vitesse estimée du véhicule (Vmod) à partir d'un couple total (Mges), déterminé au moins à partir des couples moteur (MMotAchse ) et des couples de freinage (MBremsAchse) ou des forces, un troisième dispositif de détermination (14) pour déterminer la vitesse réelle du véhicule (VRefFilt) à l'aide de valeurs de mesures, un quatrième dispositif de détermination (22, 25) pour déterminer la grandeur à cause externe (MKorrekturBeo), en particulier le couple, en fonction de la vitesse réelle et de la vitesse estimée du véhicule, et un dispositif (25) pour réinjecter la grandeur à cause externe (MKorrekturBeo), en particulier le couple, pour déterminer ou corriger le couple total (Mges) ou les forces.

9. Dispositif selon la revendication 8, **caractérisé en ce que** le deuxième dispositif de détermination comporte : un additionneur (21) pour l'addition avec signe correct de couples entraînant et freinant le véhicule, un calibreur (31) pour calibrer la sortie de l'additionneur en fonction de la masse du véhicule et du rayon des roues, et un intégrateur (32) pour intégrer la sortie du calibreur.

10. Dispositif selon la revendication 8 ou 9, **caractérisé en ce que** le quatrième dispositif de détermination comporte un soustracteur (22) qui forme la différence entre la vitesse réelle et la vitesse estimée du véhicule.

11. Dispositif selon l'une des revendications 8 à 10, en particulier 9, **caractérisé en ce que** le troisième dispositif de détermination comporte un élément de temporisation (34 à 36), en particulier de premier ordre, monté en aval de l'intégrateur.

12. Dispositif selon la revendication 1, **caractérisé par** une contre-action (23) de la différence calibrée entre la vitesse réelle et la vitesse estimée du véhicule, pour la sortie de l'intégrateur.

13. Dispositif selon l'une des revendications 8 à 12, **caractérisé en ce que** le premier dispositif de détermination comporte un dispositif (10) pour déterminer une résistance de marche (MFahrWid), un dispositif (11) pour déterminer un couple de freinage (MBremsAchse), et un dispositif (10) pour déterminer un couple moteur (MMotAchse).

Fahrwiderstände 10

Bremsenmodell 11

Motor-/Getriebe-Modell 12

VRefFilt

PIst

Alphalst

VRefFilt

NMotor

MFahrWid

MBremsAchse

MMotAchse

Beobachter 13

MIst (SummeM) geschätzt

VRefFilt

14

Fig. 1

Fig. 2

MBremsAchse

MMotAchse

MFahrWid

21

MGes

31 1/Radius/Masse

32 Integrator

33

34 T1INV

35 Integrator

VMod

22

14

VRefFilt

VError Beo

36

VKorrekturBeo

24

23 HBeobacht

25 KBeobacht

MKorrekturBeo

13

EP 1 023 547 B1

9

MGes → | 1/Radius/Masse | (31) → | Integrator | (32) → ○ (33) → | T1INV | (34) → | Integrator | (35) → VMod

(36)

**Fig. 3**

$r_R$, $\alpha$, $\alpha$, $F_T$, $F_G$, $F_N$

$M_H$ $M_M$ $M_B$

**Fig. 4**